(19) Europäisches Patentamt

European Patent Office

Office européen des brevets

(11) EP 0 985 134 B1

(12) EUROPÄISCHE PATENTSCHRIFT

(45) Veröffentlichungstag und Bekanntmachung des Hinweises auf die Patenterteilung:
**26.06.2002 Patentblatt 2002/26**

(21) Anmeldenummer: **98930733.5**

(22) Anmeldetag: **27.05.1998**

(51) Int Cl.[7]: **G01F 1/76**, G01N 29/02

(86) Internationale Anmeldenummer:
**PCT/EP98/03106**

(87) Internationale Veröffentlichungsnummer:
**WO 98/54550 (03.12.1998 Gazette 1998/48)**

(54) **VERFAHREN UND VORRICHTUNG ZUR MESSUNG VON DICHTE UND MASSENSTROM**

METHOD AND APPARATUS FOR MEASURING DENSITY AND MASS FLUX

PROCEDE ET DISPOSITIF POUR MESURER UNE DENSITE ET UN FLUX MASSIQUE

(84) Benannte Vertragsstaaten:
**DE FR GB**

(30) Priorität: **28.05.1997 DE 19722274**

(43) Veröffentlichungstag der Anmeldung:
**15.03.2000 Patentblatt 2000/11**

(73) Patentinhaber: **Degussa AG**
**40474 Düsseldorf (DE)**

(72) Erfinder:
• **RIEBEL, Ulrich**
  **D-03069 Briesen (DE)**
• **KHATCHIKIAN, Peter**
  **D-03044 Cottbus (DE)**

(56) Entgegenhaltungen:
**WO-A-91/09284**          **WO-A-93/14382**
**US-A- 4 542 644**        **US-A- 5 115 670**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Messung von Dichte und Massenstrom an dispersen Systemen mit einem Gas als fluide Phase.

*Bekannte Verfahren*

Es ist bekannt, die Zusammensetzung einer Zweiphasenflüssigkeit, wie zum Beispiel Wasserdampf, zu bestimmen, indem man die Wegzeit des Schalls mißt. Dabei wird ein Schall mit einer Frequenz von 50 Kilohertz bis 1 Million Hertz eingesetzt (US-A 5,115,670).

Aus der USA 4,541,644 ist ein Verfahren zum Bestimmen von Fremdpartikeln in einem Strom einer Flüssigkeit bekannt, wobei Ultraschall in den Strom eingegeben wird, der Schall an einer zweiten Stelle gemessen wird, der Reflex des Schalls an einer dritten Stelle gemessen wird und der reflektierte Schall mit dem Ausgangsschall verglichen wir.

Aus WO 93/14382 ist es bekannt, die Fließgeschwindigkeit eines Gas/Öl-Gemisches zu bestimmen, indem man Druckimpulse mit einer maximalen Frequenz von 100 Hz in das Medium abgibt, und den Impuls sowohl stromabwärts als auch stromaufwärts in gleichen Abständen mißt.

Aus WO 91/09284 ist es bekannt, die Fließrate von in einem Gasstrom, in dem feste Partikel verteilt sind, zu bestimmen. Dabei wird ein Ultraschallsignal schräg durch den Gasstrom geführt.

Geräte zur Massenstrommessung in Flüssigkeiten und Gasen auf der Basis von Laufzeitbestimmung von Ultraschallimpulsen stellt z.B. die Firma Panametrics, Ltd her.

Das Buch "Sensors" von 1993 Göpel W., Hesse j., Zemel J.N. Volume 7 (Mechanical Sensors) VCH Weinheim ISBN 3-527-26773-5 beinhaltet eine Zusammenstellung von Verfahren zur Messung der verschiedensten physikalischen Größen, u.a. auch unter Nutzung von (Ultra-) schalltechniken.
Zur Dichtemessung in Mehrkomponentengasen wird auf die Möglichkeit hingewiesen, die Gasdichte aus der gemessenen Schallgeschwindigkeit zu berechnen.

Zur Strömungsgeschwindigkeits- und Massenstrommessung zum Beispiel im Wasser und anderen Flüssigkeiten werden Verfahren, bei denen Ultraschallimpulse schräg durch ein durchströmtes Rohr gesendet werden, beschrieben. Bei einer speziellen Anwendung für Raffinerien, etc. werden Leckgasströme in Gasströmungen an der Änderung der Molekülmasse erkannt.

    (Smalling J. W., Braswell L.D., Lynnworth L.C., Wallace D.R.,
    Proc. 39th Annual Symp. on Instrumentation for the Process Industries, ISA (1984) 27-38, und
    Smalling J.W., Braswell L.D., Lynnworth L.C. und
    U.S. Patent No. 4,596,133 (1986))

Gegenstand der Erfindung ist ein Verfahren zur Messung von Dichte und Massenstrom an dispersen Systemen mit einem Gas als fluide Phase, welches dadurch gekennzeichnet ist, daß man in dem strömenden dispersen System die Ausbreitungsgeschwindigkeit von Schallwellen (Schallgeschwindigkeit) sowohl in als auch gegen die Strömungsrichtung mißt,
wobei Schall im Frequenzbereich 20 bis 2.000 Hz verwendet wird, der Schall in der Mitte des Rohrquerschnitts eingekoppelt wird und die Ausbreitung längs in axialer Richtung gemessen wird, die Wellenlänge des Schalls mindestens halb so groß gewählt wird wie der Durchmesser der Rohrleitung, in der das disperse System transportiert wird und die Laufzeit in jeder Ausbreitungsrichtung über mindestens 2 Laufstrecken von unterschiedlicher Länge gemessen wird.

Die Schallwellen können als Dauerschall oder als Schallimpulse eingesetzt werden.

*1. Physikalischer Hintergrund*

1.1. Messung der Suspensionsdichte

In reinen Gasen hängt die Schallgeschwindigkeit' ausschließlich von der Dichte und der Kompressibilität des Mediums ab. So gilt in Luft:

$$c_L = \sqrt{\frac{1}{K_L \cdot P_L}} \qquad (1)$$

mit $c_L$ = Schallgeschwindigkeit in Luft [m/s], $K_L$ = Kompressiblilität von Luft [m²/N] und $P_L$ = Dichte von Luft [kg/m³]. In dispersen Systemen hängt die Schallgeschwindigkeit im allgemeinen stark von der Schallwellenlänge und von der Größe der dispergierten Teilchen ab. Sind die Teilchen aber sehr viel kleiner als die Wellenlänge, verhält sich die Suspension bezüglich der Schallausbreitung wie ein homogenes System und die

Gleichung (1) gilt entsprechend. Für die Dichte und Kompressibilität müssen dann Mittelwerte der beiden Phasen eingesetzt werden, d.h.

$$C_{susp} = \sqrt{\frac{1}{K \cdot P}} \qquad (2)$$

$$K = (1-C_V) \cdot K_L + C_V \cdot K_P \qquad (3)$$

$$P = (1-C_V) \cdot P_L + C_V \cdot P_P \qquad (4)$$

$C_V$ : Volumenkonzentration [$m^3/m^3$]

L: Luft: P: Partikel

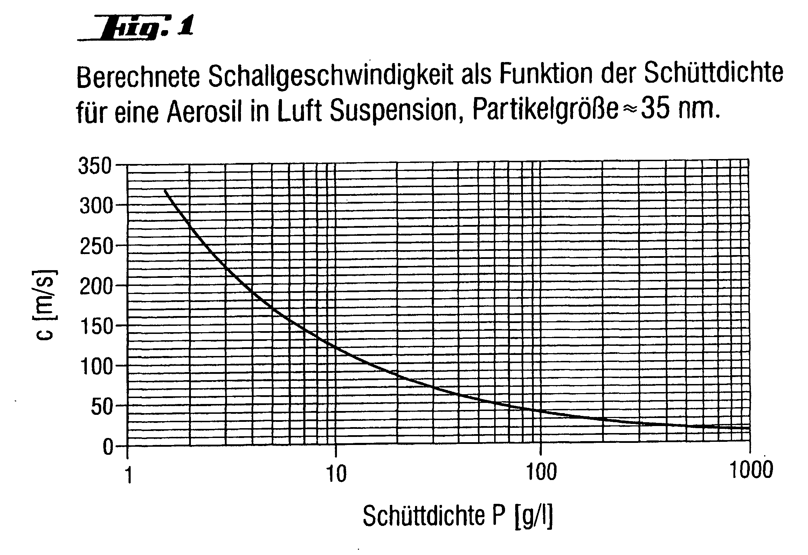

Wird die Schallgeschwindigkeit in einer solchen Suspension gemessen, kann aus den Gleichungen (2) bis (4) auf die Partikel- Volumenkonzentration zurückgerechnet werden. Daraus wiederum läßt sich leicht die Schüttdichte oder Transportdichte bestimmen. Figur 1 zeigt die mit der Gleichung (2) berechnete Schallgeschwindigkeit über die Schüttdichte aufgetragen. Für noch höhere Werte der Schüttdichte würde die Schallgeschwindigkeit wieder ansteigen. Falls die Dichte so große Werte annehmen kann, ist die eindeutige Zuordnung eines Meßwertes von c zu einer Schüttdichte nicht möglich. Bei leichten Schüttgütern wie Aerosil oder Ruß liegt man aber grundsätzlich im monoton fallenden Bereich der Kurve.

Ob die Partikeln hinreichend klein gegenüber der Wellenlänge sind, muß natürlich geprüft werden. Die Schallwelle stellt eine Schwingung der Luft dar, die sich mehr oder weniger stark auf die Partikeln überträgt. Die genannte Annahme des homogenen Mediums gilt dann, wenn die Partikeln der Luftschwingung vollständig folgen können. d.h. wenn ihre Schwingungsamplitude genauso groß ist wie die der Luft. Für das Verhältnis der beiden Amplituden gibt Skudrzyk in dem Buch "Grundlagen der Akustik" (Springer Verlag 1954) eine Beziehung an, die nach der Schallfrequenz aufgelöst werden kann. Wird willkürlich ein Amplitudenverhältnis = 0,99 gefordert, ergibt sich dafür eine Schallfrequenz von f = 2,5MHz bei einer Partikelgröße von 35nm (Aerosil).

Die Erfindung hat zum Ziel, die Glg. (2) für einen möglichst breiten Bereich von Partikelgrößen nutzbar zu machen und sieht deshalb vor, bei Frequenzen zu messen, die weit unterhalb dieser Grenze liegen, und zwar vorzugsweise im Bereich 20 - 2.000 Hz, insbesondere 105 bis 2000 Hz. In diesem Frequenzbereich ist auch die Abschwächung des Schalls sehr gering, so daß eine besonders genaue Messung durch die Wahl einer sehr langen Meßstrecke möglich erscheint.

Makroskopische Inhomogenitäten in der Suspension wie z.B. große Agglomerate können allerdings ein Problem darstellen. Solche Bereiche höherer Schüttdichte sind dann nicht mehr viel kleiner als die Wellenlänge, sie führen zu einer Frequenzabhängigkeit der Schallgeschwindigkeit. Durch empirische Kalibierung lassen sich die dadurch entstehenden Fehler aber kompensieren.

Ein weiteres Kriterium, das erfindungsgemäß bei der Wahl der Meßfrequenz zu berücksichtigen ist, ist der Durchmesser der Rohrleitung, an der die Messung durchzuführen ist. Wählt man eine Ausgestaltung des Verfahrens, bei der die Ausbreitung des Schalls längs zur Rohrachse gemessen wird, dann können schräg abgestrahlte Wellenanteile durch mehrfache Reflektion an der Rohrwand zum Empfänger gelangen, sich mit den direkt übertragenen Wellen überlagern und das Ergebnis verfälschen.

In einer speziellen Ausgestaltung der Erfindung ist deshalb vorgesehen, die Frequenz des Schalls so zu wählen, daß sich eine Wellenlänge mindestens gleich dem halben Rohrdurchmesser ergibt. Für solche und längere Wellen ist eine Ausbreitung nur in Richtung der Rohrachse möglich, und der Fehler wird vermieden.

Andererseits ist zu berücksichtigen, daß das mit der Schallwelle schwingende Material an der Rohrwand eine Reibung erfährt, die vom Zustand der Rohroberfläche abhängig ist. Auch diese Reibung führt zu einer Änderung der Schallausbreitungsgeschwindigkeit, die nicht vorausberechnet werden kann und sich auch zeitabhängig ändern kann, zum Beispiel durch Korrosion. Der Einfluß der Wand macht sich vor allem dann bemerkbar, wenn die Wellenlänge deutlich größer wird als der Rohrdurchmesser.

In einer speziellen Ausgestaltung ist deshalb vorgesehen, daß die Wellenlänge zwischen dem ½-fachen und dem 10-fachen Rohrdurchmesser liegen soll.

*1.2 Messung der Strömungsgeschwindigkeit und des Massenstromes*

Bereitet sich eine Schallwelle in einer strömenden Suspension in der gleichen Richtung wie die Strömung aus ("mit der Stömung"), sieht ein ortsfester Beobachter eine um die Strömungsgeschwindigkeit erhöhte Schallgeschwindigkeit. Bei Ausbreitung entgegen der Strömung ist der meßbare Wert entsprechend kleiner. Zur gleichzeitigen Messung von Suspensionsdichte und Strömungsgeschwindigkeit müssen die beiden Schallgeschwindigkeiten mit und gegen die Strömungsrichtung möglichst gleichzeitig gemessen werden. Die Techniken zur Messung der Schallgeschwindigkeit werden im folgenden Abschnitt näher erläutert, es ist in der Regel die Messung der Zeit T, die von der Welle gebraucht wird, um die bekannte Wegstrecke L zurückzulegen. Mit der Schallgeschwindigkeit der unbewegten Suspension c und der Strömungsgeschwindigkeit v lautet das Weg-Zeit-Gesetz

$$c+v = \frac{L}{T_{mit}} \qquad (5)$$

für die Ausbreitung mit der Strömung und

$$c-v = \frac{L}{T_{gegen}} \qquad (6)$$

für die Ausbreitung gegen die Strömung.

Aus diesen beiden Gleichungen folgen die Bestimmungsgleichungen für die beiden gesuchten Größen:

$$v = \frac{L}{2}\left[\frac{1}{T_{mit}} - \frac{1}{T_{gegen}}\right] \text{und} \qquad (7)$$

$$c = \frac{L}{2}\left[\frac{1}{T_{mit}} + \frac{1}{T_{gegen}}\right] \qquad (8)$$

Mit der Querschnittfläche A des Rohres ist der Massenstom

$$\text{dann schließlich } m = P \cdot v \cdot A \qquad (9)$$

Ein praxisnahes Zahlenbeispiel möge die Meßidee veranschaulichen:

Schüttdichte im Rohr: P = 30 g/l;
Schallgeschwindigkeit: c = 70 m/s; (aus Figur 1)
Fördergeschwindigkeit: v = 3 m /s;
Empfängerabstand: L = 300 mm.

Dann müßten gemessen werden:
Signallaufzeiten:

$T_{mit}$ = 4,11ms;
$T_{gegen}$ = 4,48ms.

Die Gleichung (8) bestimmt dann die Schüttdichte anhand des Mittelwertes der beiden Schallgeschwindigkeiten. In die Gleichung (7) geht aber die Differenz der beiden Werte, die relativ dicht beieinander liegen, ein. Diese müssen daher sehr genau gemessen werden, wobei sich der zufällige Fehler durch Mittelwertbildung mehrerer gemessener Laufzeiten verringern läßt.

Fehler können insbesondere auch dann entstehen, wenn die Laufzeiten $T_{mit}$ und $T_{gegen}$ zu verschiedenen Zeitpunkten gemessen werden, und wenn sich die Dichte des Schüttguts zwischenzeitlich geändert hat. Eine besonders vorteilhafte Ausgestaltung der Erfindung sieht deshalb vor, beide Laufzeiten genau gleichzeitig zu messen.

*2. Vorrichtung zur Messung der Schallgeschwindigkeiten*

Ein weiterer Gegenstand der Erfindung ist eine Vorrichtung zur Messung von Dichte und Massenstrom an dispersen Systemen mit einem Gas als fluide Phase, welche dadurch gekennzeichnet ist, daß an einer das disperse System führenden Leitung eine Schallquelle und in einer Entfernung von der Schallquelle verschiedene, mindestens zwei Empfänger-Schallwandler angeordnet sind, wobei weiterhin angeordnet sind:

- ein Signalgenerator für die Erzeugung eines elektrischen Signals,

- ein Schallwandler, der das elektrische Signal in eine Schallwelle umwandelt und so in die Suspension einkoppelt, daß sich die Welle gleichzeitig mit der, und gegen die Strömungsrichtung ausbreitet, wobei die Schallwelle eine Frequenz von 20 bis 2000 Ht aufweist, und die Wellenlänge des Schalls mindestens halb so groß gewählt ist wie der Durchmesser der Rohrleitung, in der das disperse System transportiert wird,

- die Empfänger jeweils stromaufwärts und stromabwärts in bezug auf den Schallwandler angeordnet sind.

*Anordnungen*

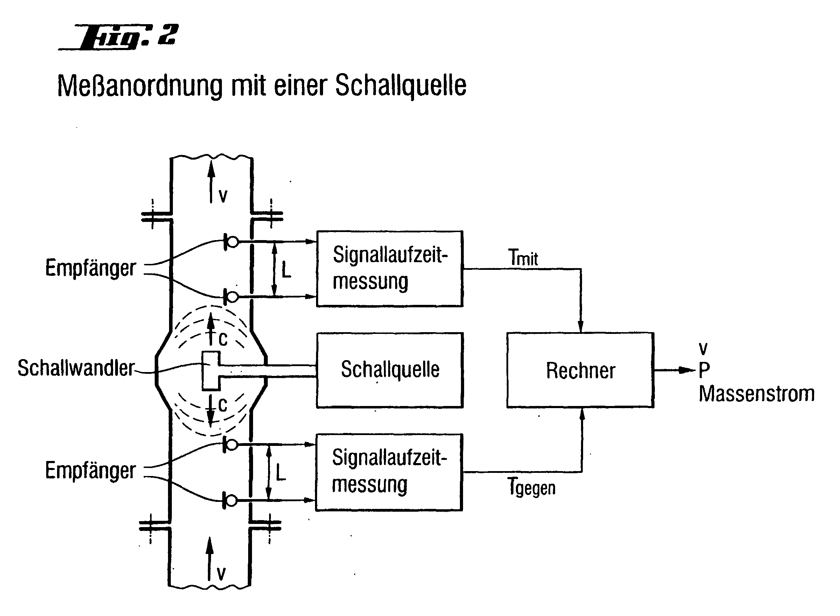

Eine mögliche Anordnung zur Messung der Schallgeschwindigkeit zeigt Figur 2. Ein Signalgenerator erzeugt die Schallimpulse zunächst als elektrisches Signal. Dieses wird von einem Schallwandler (im einfachsten Falle ein gewöhnlicher Lautsprecher) in eine Schallwelle umgewandelt und so in die Suspension eingekoppelt, daß sich die Welle gleichzeitig mit der und gegen die Strömungsrichtung ausbreitet. Die Empfänger-Schallwandler (Mikrofone oder Druckaufnehmer) setzen die Schallwelle wieder in elektrische Signale um. Es wird jeweils ein Empfängerpaar stromaufwärts und stromabwärts benötigt. Die beiden stromabwärts gelegenen Empfänger sehen beispielsweise das gleiche, aber um die Signallaufzeit $T_{mit}$ verschobene Signal. Die beiden Laufzeiten $T_{mit}$ und $T_{gegen}$ werden automatisch gemessen und zur Berechnung der gesuchten Größen nach den Gleichungen (7) bis (8) herangezogen.

Da bei Schwankungen der Konzentration die Schallgeschwindigkeit und -abschwächung sehr variabel sind, kann es vorteilhaft sein, mehr als 2 Empfänger für jede Laufrichtung einzusetzen, um aus den verschiedenen empfangenen Signalen das für die Auswertung optimale auswählen zu können bzw. um bei Messungen mit Dauerschall die Phasenlage der Welle eindeutig bestimmen zu können.

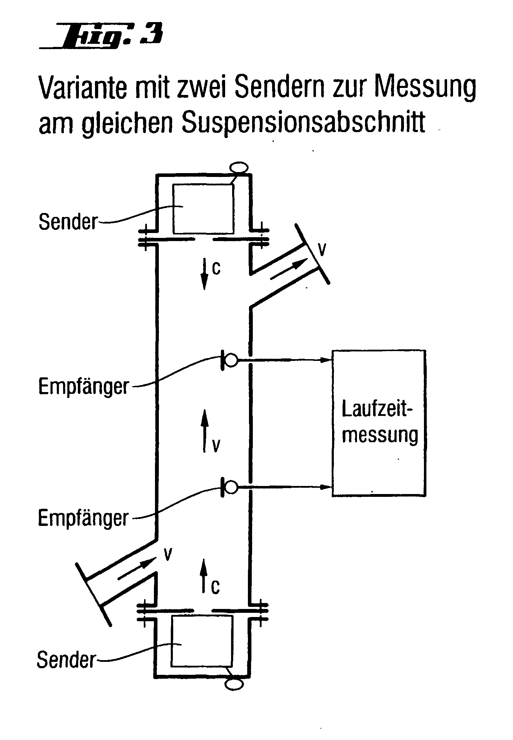

Eine andere Anordung, die in Figur 3 dargestellt ist, unterscheidet sich in einigen Details von der ersten. Sie kommt mit nur zwei Empfängern aus, doch sind auch hier Vorrichtungen mit mehreren Empfängern sinnvoll. Dafür sind zwei Sender nötig, die abwechselnd oder gleichzeitig Impulse aussenden. Arbeiten sie synchron, beziehen sich die gemessenen Laufzeiten auf exakt den gleichen Abschnitt der Suspension. Dadurch verursachen zufällige Inhomogenitäten, wie z.B. Luftblasen, kleinere Fehler in der Strömungsgeschwindigkeitsmessung. Andererseits muß der Hauptstrom umgelenkt werden.

Außer den beiden gezeigten sind natürlich noch etliche weitere Anordnungen denkbar, die bezüglich des Meßverfahrens, aber auch im Hinblick auf die Störung des Stoffstroms Vor- und Nachteile haben.

*Messung der Signallaufzeit*

Das Eintreffen eines Schallimpulses wird in vielen Fällen dadurch erfaßt, daß man den Zeitpunkt mißt, zu dem das vom Sensor abgegebene Signal einen bestimmten Pegel überschreitet. Dieses Verfahren ist jedoch sehr ungenau, insbesondere wenn das Signal durch Rauschen überlagert wird oder die Dämpfung des Signals in der Meßstrecke zeitlich variabel ist. Außerdem wird durch dieses Verfahren nicht die (theoretisch berechenbare) Phasengeschwindigkeit, siehe Gleichung 2 bis 4, sondern die von dieser abweichende Gruppengeschwindigkeit gemessen, die nicht ohne weiteres theoretisch berechnet werden kann. Eine vorteilhafte Ausgestaltung der Erfindung sieht daher vor, aus den digital zu erfassenden Schallsignalen mit Hilfe der Korrelationsfunktion die Phasengeschwindigkeit zu ermitteln.

Zur automatischen Bestimmung der Signallaufzeit zwischen zwei Empfängern bietet sich die Berechnung der Kreuzkorrelationsfunktion der beiden Signale an. Diese mathematische Operation erkennt eine etwaige Ähnlichkeit zweier Signale und kann auch die Art dieser Ähnlichkeit in einem gewissen Maße klassifizieren. Bei den oben beschriebenen Anordungen sind die Signale an zwei Empfängern im Idealfall genau gleich, aber um die Laufzeit $T_{mit}$ oder $T_{gegen}$ verschoben. Die Kreuzkorrelationsfunktion liefert diese Laufzeiten, und ist dabei gegen Störeinflüsse, wie verschieden große Signalamplituden oder Rauschen, völlig unempfindlich. Problematisch dagen ist es, wenn die beiden zu korrelierenden Signale verschiedene Frequenzspektren haben. Daher kommt der Auswahl der Signalform eine besondere Bedeutung zu.

Signale

Wie bereits erläutert, kann die Schallgeschwindigkeit in Schüttgütern von der Frequenz abhängen. Für das erfindungsgemäße Verfahren folgt daraus, daß die stromaufwärts und die stromabwärts gesendeten Signale die gleiche Frequenz haben müssen, da die andernfalls entstehende Laufzeitdifferenz nicht von der zum Teil sehr kleinen, durch die Strömungsgeschwindigkeit verursachten Laufzeitdifferenz zu unterscheiden ist. Zur Kompensation dieses Frequenzeinflusses in der Dichtebestimmung gibt es außer der empirischen Kalibrierung noch die Möglichkeit, bei verschiedenen Frequenzen zu messen und die Ergebnisse zu mitteln.

Grundsätzlich muß zwischen Dauerschall und Schallimpulsen als Signal unterschieden werden. Aus physikalischer Sicht ist der sinusförmige Dauerschall optimal, da er spektral rein ist und somit nur eine einzige Frequenzkomponente enthält. Problematisch ist dabei die eindeutige Ermittlung der Signallaufzeit aus der Phase des empfangenen Signals, wenn der Empfängerabstand größer als eine Wellenlänge ist. Der Hauptnachteil besteht aber darin, daß die an Rohrkrümmern, etc. reflektierte Welle sich der gesendeten Welle überlagert und deren Phasenlage verändert. Dann ist die Messung der Schallgeschwindigkeit aufwendiger.

Bei Impulsschall ist es im Prinzip möglich, den gesendeten (gewünschten) Impuls vom reflektierten Impuls zu unterscheiden und nur den gewünschten Impuls auszuwerten.

Aus diesen Gründen wird der Impulsbetrieb bevorzugt. Es muß aber deutlich darauf hingewiesen werden, daß die Verhältnisse bei dem erfindungsgemäßen Verfahren anders sind als bei bekannten Ultraschallanwendungen. So sind die Wellenlängen viel größer. Dies hat zur Folge, daß erstens) der Empfängerabstand kleiner als eine Wellenlänge gehalten werden kann und zweitens) die reflektierten Impulse zeitlich von den gesendeten nicht grundsätzlich getrennt werden können, so daß dieser Vorteil der Impulsbeschallung nicht immer voll zum Tragen kommt.

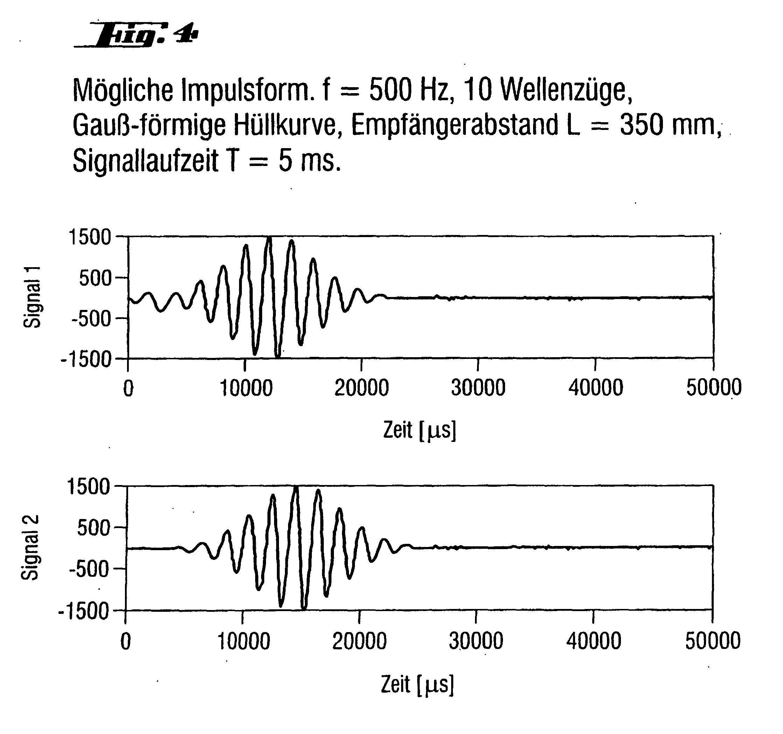

Figur 4 zeigt eine mögliche Impulsform, wie sie nacheinander von zwei Empfängern aufgenommen würde. Einen solchen Impuls kann man als das Produkt aus einer Hüllkurve mit einer sinusförmigen Trägerschwingung beschreiben, also $I(t) = H(t)*\sin(2\pi f*t)$. Dabei wird f als Trägerfrequenz bezeichnet.

Ein Nachteil des Impulses allgemein ist seine spektrale Breite, d.h. der Anteil der Signalleistung mit einer anderen Frequenz als f. Da sich die verschieden frequenten Anteile des Impulses verschieden schnell ausbreiten, ändert der Impuls seine Form beim Durchläufen der Suspension, und zwar um so mehr, je weiter er gereist ist. Dies erschwert die Laufzeitberechnung mit der Kreuzkorrelationsfunktion, da dann Signale korreliert werden müssen, die sich eben nicht nur durch eine Verschiebung auf der Zeitachse unterscheiden. Für eine gegebene Trägerfrequenz und Zahl von Wellenzügen bestimmt allein die Hüllkurve das Maß der spektralen Verbreiterung. Die Gauß'sche Glockenkurve aus Figur 4 ist in dieser Hinsicht optimal, das heißt, ein Pulssignal mit Gauß'scher Hüllkurve ergibt für gegebene Pulsbreite das schmalste Frequenzspektrum und die geringstmögliche Dispersion.

Eine weitere Möglichkeit zur Verbesserung der spektralen Reinheit ist die Erhöhung der Zahl der Wellenzüge im Impuls. Bei gleichbleibender Trägerfrequenz würde der Impuls dann aber zu lang und die Reflektionsproblematik wird verschärft. Vergrößert man die Frequenz, wird die Dämpfung, in der Suspension, die quadratisch mit f steigt, zu hoch.

Es ist denkbar, bei einer Anordnung gemäß Figur 3 zwei leicht unterschiedliche Impulse genau gleichzeitig zu senden. In diesem Fall stört die Überlagerung der beiden Signale nicht, obwohl sie sich zeitlich nicht trennen lassen.

Weiterhin könnte ein bewußt breitbandiger Impuls zum Einsatz kommen. Die gemessene Schallgeschwindigkeit stellt dann einen Mittelwert über ein großes Frequenzband dar. Attraktiv erscheint die Möglichkeit, ein solch einfaches Signal ohne Schallwandler in engerem Sinn zum Beispiel durch einen Schlag mit einem Hammer, etc. zu erzeugen.

Als kontinuierliche Variante des breitbandigen Impulses kommt ein ebenfalls breitbandiges Rauschen (Rauschsignal) in Frage.

Rauschsignale haben den Vorteil, daß 2 unabhängig voneinander erzeugte Signale trotz gleichen Frequenzspektrums eindeutig voneinander unterschieden werden können. Werden also 2 unabhängige Rauschsignale gesendet und mit dem Korrelationsverfahren ausgewertet, dann kann in derselben Meßstrecke in beiden Ausbreitungsrichtungen gleichzeitig und kontinuierlich gemessen werden. Vorteilhaft ist diese Ausführungsform insbesondere dann, wenn das Material nur geringe Dispersion zeigt, das heißt, bei sehr feinen, homogenen Schüttgütern.

Beide Varianten haben den entscheidenden Vorteil, daß sie bei geeigneter Wahl des Empfängerabstandes unempfindlich gegen den Einfluß der reflektierten Wellen gemacht werden können. Im Gegensatz zu schmalbandigen Signalen läßt sich nämlich die Unterscheidung der beiden Anteile anhand der Kreuzkorrelationsfunktion durchführen.

In einer Ausführungsform der Erfindung können die durch Turbulenzen von der Strömung selbst erzeugten Schallwellen (autogene Schallwellen) benutzt werden. In einer weiteren Ausführungsform der Erfindung kann der die Messung verfälschende Einfluß der außerhalb der Meßstrecke reflektierten Wellenanteile ausgeschaltet werden, und zwar entweder durch eine schalldämpfende Ausgestaltung des Rohres außerhalb der Meßstrecke, oder durch einen gesteuerten, gegenphasigen Schallimpuls, der ein Austreten der Schallwellen aus dem Bereich der Meßstrecke unterbindet.

Das erfindungsgemäße Verfahren ist geeignet, die Gesamtdichte, die Strömungsgeschwindigkeit sowie den Massenstrom eines strömenden, dispersen Systems zu messen. Wird der gemessene Massenstrom über die Zeit aufintegriert, kann beispielsweise der Füllstand eines beschickten Silos vorausgesagt werden. Die Hauptanwendung dürfte die pneumatische Förderung von feinen Schüttgütern, wie zum Beispiel von Ruß, pyrogen hergestellten Kieselsäuren oder anderen hochdispersen Feststoffen, sein. Denkbar ist z.B. auch die Messung des Umlaufs bei zirkulierenden Wirbelschichten oder nur der Schüttdichte bei der stationären Wirbelschicht.

Weitere Anwendungen betreffen die Messung von Schäumen und alle blasenhaltigen Strömungen, in denen sich die Schallgeschwindigkeit ebenfalls gemäß Gleichung (2) berechnen läßt.

## Patentansprüche

1. Verfahren zur Messung von Dichte und Massenstrom an dispersen Systemen mit einem Gas als fluide Phase, **dadurch gekennzeichnet, daß** man in dem strömenden dispersen System die Ausbreitungsgeschwindigkeit von Schallwellen sowohl in als auch gegen die Strömungsrichtung mißt, wobei Schall im Frequenzbereich 20 - 2.000 Hz verwendet wird, der Schall in der Mitte des Rohrquerschnitts eingekoppelt wird und die Ausbreitung längs in axialer Richtung gemessen wird, die Wellenlänge des Schalls mindestens halb so groß gewählt wird wie der Durchmesser der Rohrleitung, in der das disperse System transportiert wird, die Laufzeit in jeder Ausbreitungsrichtung über mindestens 2 Laufstrecken von unterschiedlicher Länge gemessen wird.

2. Verfahren nach Anspruch 1, **dadurch gekennzeichnet, daß** man Dauerschall verwendet.

3. Verfahren nach Anspruch 1, **dadurch gekennzeichnet, daß** man Schallimpulse verwendet.

4. Verfahren nach einem der Ansprüche 1 - 3,
   **dadurch gekennzeichnet, daß** 2 gegenläufige Schallwellen dieselbe Meßstrecke genau gleichzeitig oder direkt aufeinander folgen durchlaufen.

5. Verfahren nach einem der Ansprüche 1 - 4,
   **dadurch gekennzeichnet, daß** 2 gegenläufige Schallwellen zwei benachbarte Meßstrecken genau gleichzeitig oder direkt aufeinander folgend durchlaufen.

6. Verfahren nach einem der Ansprüche 1 bis 5, **dadurch gekennzeichnet, daß** der die Messung verfälschende Einfluß der außerhalb der Meßstrecke reflektierten Wellenanteile ausgeschaltet wird, und zwar entweder durch eine schalldämpfende Ausgestaltung des Rohres außerhalb der Meßstrecke, oder durch einen gesteuerten, gegenphasigen Schallimpuls, der ein Austreten der Schallwelle aus dem Bereich der Meßstrecke unterbindet.

7. Vorrichtung zur Messung von Dichte und Massenstrom an dispersen Systemen mit einem Gas als fluide Phase, **dadurch gekennzeichnet, daß** an einer das disperse System führenden Leitung eine Schallquelle und in einer Entfernung von der Schallquelle verschiedene, mindestens zwei Empfänger-Schallwandler angeordnet sind, wobei weiterhin angeordnet sind:

   - ein Signalgenerator für die Erzeugung eines elektrischen Signals,

   - ein Schallwandler, der das elektrische Signal in eine Schallwelle umwandelt und so in die Suspension einkoppelt, daß sich die Welle gleichzeitig mit der, und gegen die Strömungsrichtung ausbreitet, wobei die Schallwelle eine Frequenz von 20 bis 2000 Hz aufweist, und die Wellenlänge des Schalls mindestens halb so groß gewählt ist wie der Durchmesser der Rohrleitung, in der das disperse System transportiert wird,

   - die Empfänger jeweils stromaufwärts und stromabwärts in bezug auf den Schallwandler angeordnet sind.

## Claims

1. Process for measuring density and mass flow in respect of disperse systems with a gas as fluid phase, **characterised in that** the speed of propagation of sound waves in the flowing disperse system is measured both in the direction of flow and contrary to the direction of flow, wherein use is made of sound in the frequency range 20 - 2,000 Hz, the sound is introduced in the middle of the cross-section of the pipe and the propagation is measured lengthwise in the axial direction, the wavelength of the sound is chosen to be at least half the magnitude of the diameter of the pipeline in which the disperse system is being transported, the transit time in each direction of propagation is measured over at least two transit sections of differing length.

2. Process according to Claim 1, **characterised in that** use is made of continuous sound.

3. Process according to Claim 1, **characterised in that** use is made of sonic pulses.

4. Process according to one of Claims 1 - 3, **characterised in that** two opposing sound waves pass through the same measuring length at precisely the same time or follow one another directly.

5. Process according to one of Claims 1 - 4, **characterised in that** two opposing sound waves pass through two adjacent measuring lengths at precisely the same time or following one another directly.

6. Process according to one of Claims 1 - 5, **characterised in that** the influence of the wave portions reflected outside the measuring length which falsify the measurement is eliminated, to be specific either by means of a sound-muffling configuration of the pipe outside the measuring length or by means of a controlled antiphase sonic pulse which prevents emergence of the sound wave from the region of the measuring length.

7. Device for measuring density and mass flow in respect of disperse systems with a gas as fluid phase, **characterised in that** a sound source and, at a distance from the sound source, various, at least two, sonic receiver-transducers are arranged on a line conducting the disperse system, wherein furthermore:

- a signal generator for the generation of an electrical signal,
- a sonic transducer which converts the electrical signal into a sound wave and is introduced into the suspension in such a way that the wave is propagated simultaneously with the direction of flow and contrary to the direction of flow, wherein the sound wave has a frequency of 20 to 2,000 Hz and the wavelength of the sound is chosen to be at least half the magnitude of the diameter of the pipeline in which the disperse system is being transported,
- the receivers are arranged in each case upstream and downstream in relation to the sonic transducer,

are provided.


**Revendications**

1. Procédé pour mesurer la densité et le débit massique de systèmes dispersés dont la phase fluide est un gaz, **caractérisé en ce qu'**

- on mesure dans le système dispersé la vitesse de propagation d'ondes sonores dans le sens de l'écoulement et dans le sens inverse,
- on utilise des sons dans la plage de fréquence allant de 20 à 2000 Hz qui sont injectés au milieu de la section du tube et dont on mesure la propagation en direction axiale,
- la longueur d'onde des sons est choisie au moins égale à la moitié du diamètre du tube dans lequel est transporté le système dispersé,
- le temps de parcours dans chaque sens de propagation est mesuré sur au moins deux distances de longueurs différentes.

2. Procédé selon la revendication 1,
**caractérisé en ce qu'**
on utilise un son continu.

3. Procédé selon la revendication 1,
**caractérisé en ce qu'**
on utilise des impulsions sonores.

4. Procédé selon l'une quelconque des revendications 1 à 3,
**caractérisé en ce que**

deux ondes sonores parcourent en sens opposés la même distance de mesure exactement en même temps ou directement l'une après l'autre.

5. Procédé selon l'une quelconque des revendications 1 à 4, **caractérisé en ce que** deux ondes sonores parcourent en sens opposés deux distances de mesure voisines exactement en même temps ou directement l'une après l'autre.

6. Procédé selon l'une quelconque des revendications 1 à 5, **caractérisé en ce que** l'influence faussant la mesure, qu'exercent les parties d'ondes réfléchies au-delà des distances de mesure est éliminée, et cela soit en donnant au tube une configuration amortissant le son au-delà des distances de mesure, soit en utilisant une impulsion sonore en opposition de phase, commandée, qui empêche l'onde sonore de sortir de la distance de mesure.

7. Dispositif pour mesurer la densité et le débit massique de systèmes dispersés dont la phase fluide est un gaz, **caractérisé en ce que** :

   - sur une conduite transportant le système dispersé sont montés une source sonore et au moins deux récepteurs convertisseurs de son différents, placés à une certaine distance de la source,
   - un générateur produit un signal électrique,
   - un convertisseur de son transforme le signal électrique en une onde sonore qui est injectée dans la suspension, de sorte qu'elle se propage en même temps, dans le sens et en sens contraire de la direction de l'écoulement,
   - l'onde sonore a une fréquence comprise entre 20 et 2000 Hz et une longueur qui est choisie au moins égale à la moitié du diamètre de la conduite tubulaire dans laquelle est transporté le système dispersé, et
   - les récepteurs sont disposés chaque fois en amont et en aval du convertisseur de son.

**Fig. 1**

Berechnete Schallgeschwindigkeit als Funktion der Schüttdichte
für eine Aerosil in Luft Suspension, Partikelgröße ≈ 35 nm.

EP 0 985 134 B1

## Fig. 2

### Meßanordnung mit einer Schallquelle

EP 0 985 134 B1

## Fig. 3

### Variante mit zwei Sendern zur Messung am gleichen Suspensionsabschnitt

EP 0 985 134 B1

_Fig. 4_

Mögliche Impulsform. f = 500 Hz, 10 Wellenzüge,
Gauß-förmige Hüllkurve, Empfängerabstand L = 350 mm,
Signallaufzeit T = 5 ms.

EP 0 985 134 B1